# EUROPÄISCHE PATENTSCHRIFT

(11) **EP 3 656 991 B1**
(45) Veröffentlichungstag und Bekanntmachung des Hinweises auf die Patenterteilung: **31.03.2021**
(21) Anmeldenummer: 19209024.9
(22) Anmeldetag: 14.11.2019
(51) Int. Cl.: F01N 13/00, F01N 13/18, B21J 5/06, B23K 20/12, B23K 20/227, B23K 101/00, B23K 101/06

(54) **VERFAHREN ZUR HERSTELLUNG EINER ABGASANLAGE**
METHOD FOR MANUFACTURING AN EXHAUST SYSTEM
PROCÉDÉ DE FABRICATION D'UN SYSTÈME DE GAZ D'ÉCHAPPEMENT

(30) Priorität: 23.11.2018 DE 102018129506
(43) Veröffentlichungstag der Anmeldung: 27.05.2020
(73) Patentinhaber: Eberspächer Exhaust Technology GmbH, 66539 Neunkirchen (DE)
(72) Erfinder: Röhr, Benjamin, 73732 Esslingen (DE); Krajinovic, Damir, 73734 Esslingen (DE); Müller, Thomas, 66916 Breitenbach (DE); Hempel, Frank, 66450 Bexbach (DE); Deuscher, Benjamin, 70188 Stuttgart (DE)
(74) Vertreter: Ruttensperger Lachnit Trossin Gomoll

(56) Entgegenhaltungen:
- EP-A1- 2 905 091
- DE-A1-102005 018 881
- DE-A1-102007 061 251
- DE-A1-102013 015 038
- DE-A1-102013 103 808
- JP-A- 2008 019 753
- US-A1- 2007 160 510
- US-A1- 2007 178 026

## Beschreibung

Die vorliegende Erfindung betrifft ein Verfahren zur Herstellung einer Abgasanlage, die beispielsweise in einem Fahrzeug eingesetzt werden kann, um die von einer Brennkraftmaschine ausgestoßenen Verbrennungsabgase zur Umgebung hin abzugeben.

Für einen möglichst schadstoffarmen Betrieb einer Brennkraftmaschine oder/und von in einer derartigen Abgasanlage enthaltenen Abgasreinigungsanordnungen, wie zum Beispiel Partikelfilter, Oxidationskatalysatoren oder SCR-Katalysatoren, ist es erforderlich, verschiedene das Abgas betreffende Informationen im Bereich einer derartigen Abgasanlage bereitzustellen. Dies betrifft beispielsweise die Abgastemperatur oder die Abgaszusammensetzung repräsentierende Informationen. Hierzu können im Bereich der Abgasanlage derartige Informationen liefernde Sensoren vorgesehen sein, die zur Bereitstellung der Messsignale in Wechselwirkung mit dem in der Abgasanlage strömenden Abgas treten können.

Ein Verfahren zur Herstellung einer Abgasanlage gemäß dem Oberbegriff des Anspruchs 1, bei welchem vermittels eines sogenannten Flow-Drill-Verfahrens an einer Wandung einer Abgasführungskomponente ein Ansatz gebildet wird, an welchem ein Sensor festgelegt werden kann, ist aus der US 2007/0178026 A1 bekannt.

Es ist die Aufgabe der vorliegenden Erfindung, ein Verfahren zur Herstellung einer Abgasanlage bereitzustellen, mit welchem in einfacher Weise bauliche Maßnahmen zum Anordnen eines oder mehrerer Sensoren an der Abgasanlage vorgesehen werden können.

Erfindungsgemäß wird diese Aufgabe gelöst durch ein Verfahren zur Herstellung einer Abgasanlage, insbesondere für eine Brennkraftmaschine eines Fahrzeugs, gemäß Anspruch 1. Dieses Verfahren umfasst die Maßnahmen:
a) Bereitstellen einer Abgasführungskomponente mit einer aus Metallmaterial aufgebauten Wandung,
b) Bereitstellen eines an der Wandung der Abgasführungskomponente festzulegenden Sensoraufnahmestutzens aus Metallmaterial, wobei der Sensoraufnahmestutzen einen wenigstens teilweise außerhalb der Abgasführungskomponente zu positionierenden Sensoraufnahmebereich und einen in die Wandung der Abgasführungskomponente eingreifend zu positionierenden Verbindungsbereich umfasst,
c) Pressen des Sensoraufnahmestutzens mit seinem Verbindungsbereich gegen eine Außenoberfläche der Wandung der Abgasführungskomponente in einem zur Festlegung des Sensoraufnahmestutzens vorgesehenen Befestigungsbereich der Wandung und dabei Drehen des Sensoraufnahmestutzens um eine Stutzen-Längsachse derart, dass wenigstens der Verbindungsbereich des Sensoraufnahmestutzens in das Aufbaumaterial der Wandung der Abgasführungskomponente eindringt und zwischen dem Metallmaterial der Wandung und dem Metallmaterial des Sensoraufnahmestutzens eine materialschlüssige Verbindung entsteht.

Bei dem erfindungsgemäßen Verfahren wird ein Sensoraufnahmestutzen nach Art eines sogenannten Flow-Drill-Verfahrens in die Wandung der Abgasführungskomponente eingearbeitet. Aufgrund des Drucks und der Drehung des Sensoraufnahmestutzens und der dabei entstehenden Reibwechselwirkung zwischen dem Sensoraufnahmestutzen und der Wandung der Abgasführungskomponente wird primär die Wandung der Abgasführungskomponente aufgeschmolzen, so dass der Sensoraufnahmestutzen durch diese hindurchdringen kann. Da auch der Sensoraufnahmestutzen mit Metallmaterial aufgebaut ist, kann am Ende des Verbindungsvorgangs dann, wenn der Sensoraufnahmestutzen in seine bezüglich der Wandung der Abgasführungskomponente vorgesehene Soll-Einbauposition gelangt ist und das Drehen desselben beendet wird, das Aufbaumaterial des Sensoraufnahmestutzens mit dem Aufbaumaterial der Wandung der Abgasführungskomponente eine materialschlüssige Verbindung eingehen. Weitere Maßnahmen zum Herstellen einer materialschlüssigen Verbindung, wie zum Beispiel die Durchführung eines Schweißvorgangs, sind dann nicht erforderlich.

Da bei der erfindungsgemäßen Vorgehensweise eine Öffnung in der Wandung der Abgasführungskomponente beim Eindringen des Sensoraufnahmestutzens erzeugt wird, wird für einen möglichst einfach durchzuführenden Herstellungsvorgang vor Durchführung der Maßnahme c) im Befestigungsbereich keine Öffnung in der Wandung zur Aufnahme des Sensoraufnahmestutzens gebildet, so dass der Befestigungsbereich also zunächst öffnungsfrei bereitgestellt wird.

Auch kann vorgesehen sein, dass bei der Maßnahme a) die Abgasführungskomponente im Befestigungsbereich mit einer gekrümmten Außenoberfläche bereitgestellt wird. Dies bedeutet, dass beispielsweise dann, wenn die Abgasführungskomponente als Rohr ausgebildet ist, im Befestigungsbereich keine Abflachung des Rohrs erzeugt werden muss, da durch beim Einbringen des Sensoraufnahmestutzens verdrängtes Aufbaumaterial der Wandung der Abgasführungskomponente ein wulstartiger Randbereich einer den Sensoraufnahmestutzen aufnehmenden Öffnung in der Wandung der Abgasführungskomponente erzeugt wird und aufgrund des Umstandes, dass in diesem Zustand das Aufbaumaterial der Wandung aufgeschmolzen und somit fließfähig ist, sich an die Geometrie des Sensoraufnahmestutzens anschmiegt.

Das Eindringen des Sensoraufnahmestutzens in das Aufbaumaterial der Wandung der Abgasführungskomponente wird dadurch unterstützt, dass bei der Maßnahme b) der Sensoraufnahmestutzen mit einem sich spitzenartig verjüngenden Verbindungsbereich bereitgestellt wird. Beispielweise kann vorgesehen sein, dass der Sensoraufnahmestutzen mit einem Verbindungsbereich mit kegelstumpfartiger Außenumfangskontur bereitgestellt wird.

Um eine definierte Positionierung des Sensoraufnahmestutzens bezüglich der Wandung zu unterstützen, kann bei der Maßnahme b) der Sensoraufnahmestutzen mit einem an den Verbindungsbereich anschließenden Übergangsbereich und dem an den Übergangsbereich anschließenden, bezüglich des Übergangsbereichs radial erweiterten Sensoraufnahmebereich bereitgestellt werden. Beispielsweise kann der Übergangsbereich mit zylindrischer Außenumfangskontur bereitgestellt werden und kann in einer stufenartigen Erweiterung in den Sensoraufnahmebereich übergehen. Bei einer alternativen Ausgestaltung kann auf einen derartigen Übergangsbereich verzichtet werden und bei der Maßnahme b) der Sensoraufnahmestutzen mit dem an den Verbindungsbereich anschließenden Sensoraufnahmebereich bereitgestellt werden. Dazu kann beispielsweise vorgesehen sein, dass der Verbindungsbereich in seinem an den Sensoraufnahmebereich anschließenden axialen Endbereich eine der Außenabmessung des Sensoraufnahmebereichs entsprechende Außenabmessung aufweist.

Durch den unter Druck durchgeführten Rotationsprozess und die dabei entstehende Reibungswärme wird insbesondere das Aufbaumaterial der Wandung der Abgasführungskomponente aufgeschmolzen, so dass der Sensoraufnahmestutzen durch die Wandung hindurchdringen kann. Solange der Sensoraufnahmestutzen sich bezüglich der Wandung dreht, kann eine materialschlüssige Verbindung zwischen diesen beiden Komponenten nicht entstehen. Es wird daher weiter vorgeschlagen, dass bei der Maßnahme c) dann, wenn der Sensoraufnahmestutzen eine Soll-Einbaulage bezüglich der Wandung der Abgasführungskomponente erreicht, das Drehen des Sensoraufnahmestutzens um die Stutzen-Längsachse beendet wird. Bei dann in der Soll-Einbaulage bezüglich der Wandung positioniertem, sich bezüglich dieser aber nicht mehr bewegendem Sensoraufnahmestutzen können die Materialien dieser beiden Bauteile in ihren aneinander angrenzenden Oberflächenbereichen aufgrund der sehr hohen Temperatur, die diese in diesem Zustand aufweisen werden, miteinander verschmelzen und auf diese Art und Weise einen Materialschluss erzeugen.

Um eine über den Umfang gleichmäßige Wechselwirkung zwischen dem Sensoraufnahmestutzen und der Wandung bei der Rotation des Sensoraufnahmestutzens zu gewährleisten, wird vorgeschlagen, dass der Sensoraufnahmestutzen wenigstens in seinem in die Wandung eingreifend oder durch diese hindurchgreifend zu positionierenden Längenbereich mit im Wesentlichen rotationsymmetrischer Außenumfangskontur bereitgestellt ist.

Die Wandung der Abgasführungskomponente kann beispielsweise mit Blechmaterial aufgebaut sein. Der Sensoraufnahmestutzen kann mit vorzugsweise austenitischem Edelstahlmaterial aufgebaut sein.

Die vorliegende Erfindung wird nachfolgend mit Bezug auf die beiliegenden Figuren detailliert beschrieben. Es zeigt:
- Fig. 1: eine Abgasanlage für eine Brennkraftmaschine eines Fahrzeugs;
- Fig. 2: einen mit einer Abgasführungskomponente zu verbindenden Sensoraufnahmestutzen;
- Fig. 3: den in Fig. 2 dargestellten Sensoraufnahmestutzen nach dem Anbinden desselben an die Abgasführungskomponente;
- Fig. 4: eine der Fig. 3 entsprechende Darstellung mit einer alternativen Formgebung des Sensoraufnahmestutzens.

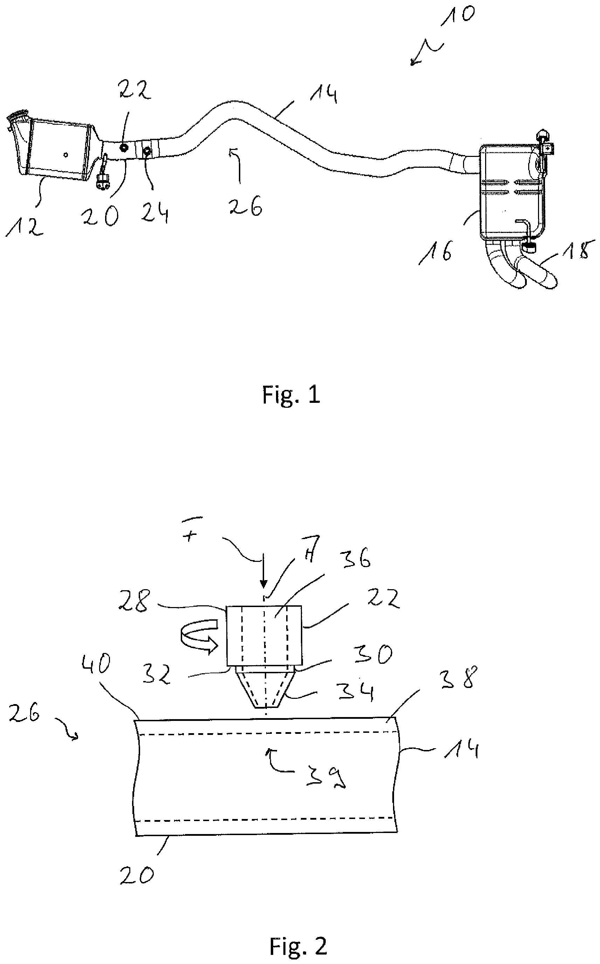

Die Fig. 1 zeigt ein Beispiel einer allgemein mit 10 bezeichneten Abgasanlage für eine Brennkraftmaschine in einem Fahrzeug. In einem stromaufwärtigen Bereich der Abgasanlage 10 ist eine allgemein mit 12 bezeichnete Abgasbehandlungsanordnung, beispielsweise umfassend einen Partikelfilter, eine Katalysatoreinheit oder dergleichen angeordnet. Eine dann folgende Rohrleitung 14 führt das aus der Abgasbehandlungsanordnung 12 abgegebene Abgas zu einem im stromabwärtigen Endbereich positionierten Schalldämpfer 16. Über ein oder mehrere Endrohre 18 wird das Abgas aus dem Schalldämpfer 16 dann zur Umgebung abgegeben.

In einem auf die Abgasbehandlungsanordnung 12 folgenden Rohrabschnitt 20 der Rohrleitung 14 sind im dargestellten Beispiel an zwei Positionen Sensoraufnahmestutzen 22, 24 vorgesehen. Im Bereich dieser Sensoraufnahmestutzen 22, 24 können Sensoren, beispielsweise ein Temperatursensor und ein NOx-Sensor, derart angeordnet werden, dass sie in Wechselwirkung mit dem in der Rohrleitung 14 strömenden Abgas gelangen und somit Information über dieses bereitstellen.

Die Fig. 2 veranschaulicht beispielsweise anhand des Sensoraufnahmestutzens 22, wie dieser in einfacher Art und Weise an die allgemein als Abgasführungskomponente 26 zu betrachtende Rohrleitung 14 angebunden wird.

Der Sensoraufnahmestutzen 22 weist in dem in Fig. 2 dargestellten Ausgestaltungsbeispiel einen an seinem Außenumfang im Wesentlichen zylindrisch und beispielsweise mit kreisrunder Umfangskontur gestalteten Sensoraufnahmebereich 28 auf, der in Richtung einer Stutzen-Längsachse A langgestreckt ist. In axialer Richtung auf den Sensoraufnahmebereich 28 folgend ist ein beispielsweise ebenfalls zylindrisch und rotationssymmetrisch, also zum Beispiel kreisrund geformter Übergangsbereich 30 vorgesehen, der im Bereich einer stufenartigen Radialerweiterung 32 in den durchmessergrößeren Sensoraufnahmebereich 28 übergeht. An den Übergangsbereich 30 schließt ein ebenfalls mit rotationssymmetrischer Außenumfangskontur ausgebildeter Verbindungsbereich 34 an. Der Verbindungsbereich 34 bildet eine Spitze des Sensoraufnahmestutzens 22 und ist beispielsweise ausgehend vom Übergangsbereich 30 sich kegelstumpfartig verjüngend ausgebildet.

Im Inneren des Sensoraufnahmestutzens 22 ist eine diesen vollständig durchsetzende Öffnung 36 vorgesehen. In diese kann insbesondere im Sensoraufnahmebereich 28 ein Sensor eingesetzt werden. Dazu kann beispielsweise in ihren im Sensoraufnahmebereich 28 sich erstreckenden Bereich die Öffnung 36 mit Innengewinde ausgebildet sein, so dass ein komplementär mit Außengewinde aufgebauter Sensor in den Sensoraufnahmestutzen 22 eingeschraubt werden kann. Im Bereich des Verbindungsbereichs 34 ist, angepasst an die sich verjüngende Kontur des Verbindungsbereichs 34, auch die Öffnung 36 sich verjüngend ausgebildet. An dem vom Sensoraufnahmebereich 28 entfernten axialen Ende ist die Öffnung 36 offen, so dass über diesen Bereich der Öffnung 36 ein in dem Sensoraufnahmestutzen 22 getragener Sensor in Wechselwirkung mit dem im Leitungsabschnitt 20 strömenden Abgas treten kann.

Zur festen Anbindung des Sensoraufnahmestutzens 22 an die Rohrleitung 14 bzw. eine Wandung 38 der die Abgasführungskomponente 26 bildenden Rohrleitung 14 in einem Befestigungsbereich 39 wird der Sensoraufnahmestutzen 22 in ein Drehwerkzeug eingespannt und zur Drehung um die Stutzen-Längsachse A mit einer Drehzahl im Bereich von 500 bis 1500 Umdrehungen pro Minute angetrieben. Dabei wird der Sensoraufnahmestutzen 22 mit einer in Richtung der Stutzen-Längsachse A wirkenden Kraft F im Bereich von 800 N bis 1000 N beaufschlagt und so gegen eine Außenumfangsfläche 40 der Wandung 38 im Befestigungsbereich 39 gepresst. Durch die dabei entstehende Reibwärme wird das Aufbaumaterial der Wandung 40 so stark erhitzt, dass dieses aufschmilzt und der Verbindungsbereich 34 des Sensoraufnahmestutzens 20 durch die Wandung 38 hindurchdringen kann.

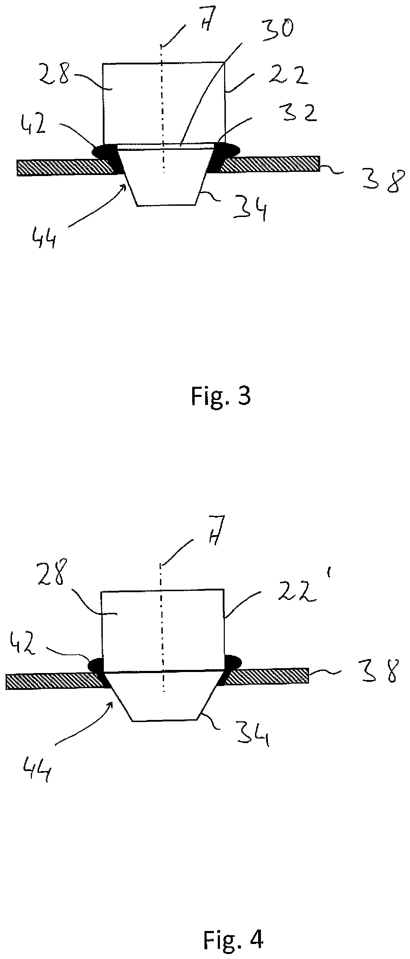

Wie in Fig. 3 veranschaulicht, wird dabei in dieser Darstellung schwarz eingezeichnetes und aufgeschmolzenes Material der Wandung 38 auch nach außen ausweichen und einen wulstartigen Randbereich 42 bilden. Nähert der Sensoraufnahmestutzen 22 in dieser Phase sich mit der stufenartigen Radialerweiterung 32 diesem wulstartigen Randbereich 42 aus noch aufgeschmolzenem Aufbaumaterial der Wandung 38 an, so passt dieser wulstartige Randbereich 42 sich an die Formgebung der stufenartigen Radialerweiterung 32 bzw. auch des Übergangsbereichs 30 und des die Wandung 38 durchsetzenden Abschnitts des Verbindungsbereichs 34 an. Insbesondere entsteht dabei ein in Umfangsrichtung um die Stutzen-Längsachse A vorzugsweise unterbrechungsfrei durchlaufender Anlagekontakt des wulstartigen Randbereichs 42 an der stufenartigen Radialerweiterung 32.

Erreicht im Verlaufe der unter Rotation ablaufenden Axialverschiebebewegung des Sensoraufnahmestutzens 22 dieser seine Soll-Einbaulage bezüglich der Wandung 38, wird die Drehzahl, mit welcher der Sensoraufnahmestutzen 22 um die Stutzen-Längsachse A rotiert, allmählich verringert, bis die Drehung beendet wird und der Sensoraufnahmestutzen 22 weder fortgesetzt axial bezüglich der Wandung 38 verschoben wird, noch sich bezüglich der Wandung 38 um die Stutzen-Längsachse A dreht. In diesem Zustand sind die Aufbaumaterialien der Wandung 38 einerseits und des Sensor-Aufnahmestutzens 22 andererseits in ihren aneinander angrenzenden Oberflächenbereichen noch so heiß, dass sie miteinander verschmelzen können und eine materialschlüssige Verbindung eingehen. Diese materialschlüssige Verbindung ist in Umfangsrichtung um die Stutzen-Längsachse A unterbrechungsfrei umlaufend und stellt somit einen vollständig gasdichten Anschluss des Sensoraufnahmestutzens 22 an die Wandung 38 in einer darin dann gebildeten Öffnung 44 bereit. In diesem Zustand ragt der Sensoraufnahmestutzen 22 mit einem Teil seines Verbindungsbereichs 34 durch die Wandung 38 hindurch und in das Innenvolumen des Leitungsabschnitts 20 der Rohrleitung 14 hinein. Wie vorangehend bereits ausgeführt, ist in diesem Bereich der Sensoraufnahmestutzen 22 mit seiner darin gebildeten Öffnung 36 axial offen, so dass ein nachfolgend dann in den Sensoraufnahmestutzen 22 eingesetzter Sensor in Wechselwirkung mit dem in der Rohrleitung 14 strömenden Abgas treten und Information darüber bereitstellen kann.

Eine alternative Ausgestaltung eines Sensoraufnahmestutzens 22' ist in Fig. 4 dargestellt. Man erkennt, dass bei dieser Ausgestaltung der Verbindungsbereich 34 im Wesentlichen stufenlos und ohne Übergangsbereich in den Sensoraufnahmebereich 28 übergeht. Insbesondere ist dort, wo der beispielsweise kegelstumpfartig sich verjüngende Verbindungsbereich 34 an den mit im Wesentlichen zylindrischer Außenumfangsgestalt ausgebildeten Sensoraufnahmebereich 28 anschließt, der Verbindungsbereich 34 mit gleicher Umfangsabmessung, also beispielsweise Durchmesser bei kreisrunder Ausgestaltung, wie der Sensoraufnahmebereich 28 ausgebildet.

Bei dem vorangehend mit Bezug auf die Fig. 2 und 3 beschriebenen Prozess zum Einbringen des Sensoraufnahmestutzens 22' in die Wandung 38 kann der in Fig. 4 dargestellte Sensoraufnahmestutzen 22' beispielsweise mit seinem Sensoraufnahmebereich 28 bis in den Bereich des wulstartigen Randbereichs 42, ggf. auch bis in den Bereich der Wandung 38 hineinverschoben werden. Auch könnte der Sensoraufnahmestutzen 22' noch weiter durch die in der Wandung 38 gebildete Öffnung 44 hindurchgeschoben werden, so dass beispielsweise der im Wesentlichen zylindrisch geformte Sensoraufnahmebereich 28 auch die Wandung 38 nahezu oder vollständig durchsetzt bzw. zum Inneren des Leitungsabschnitts 20 noch hervorsteht. In diesem Falle kommt dem Verbindungsbereichs 34 im Wesentlichen die Funktion zu, im Zuge des Vorgangs zur Herstellung der Verbindung die Öffnung in die Wandung 38 einzuarbeiten, während in dem teilweise in die Wandung 38 hinein oder sich durch diese hindurch erstreckenden Teil des Sensoraufnahmebereichs 28 die materialschlüssige Verbindung zwischen dem Sensoraufnahmestutzen 22' und der Wandung 38 realisiert ist.

Bei der erfindungsgemäßen Vorgehensweise zur Herstellung einer Abgasanlage, insbesondere zum Anbinden eines Sensoraufnahmestutzens an eine Abgasführungskomponente der Abgasanlage ist es nicht erforderlich, vor dem Einbringen eines Sensoraufnahmestutzens in einer Wandung einer Abgasführungskomponente eine dann den Sensoraufnahmestutzen aufnehmende Öffnung, beispielsweise durch Laserschneiden oder sonstige Bearbeitungsvorgänge einzubringen. Auch ist es nicht erforderlich, in einem Befestigungsbereich, in welchem ein Sensoraufnahmestutzen an der Wandung einer Abgasführungskomponente angebracht werden soll, eine Abflachung zum Bereitstellen eines im Wesentlichen ungekrümmten Plateaubereichs zu erzeugen, an welchem dann eine stufenartige Radialerweiterung am Sensoraufnahmestutzen im Wesentlichen über den gesamten Umfang anliegend positioniert werden kann, um nachfolgend in diesem Bereich auch durch Erzeugen einer Schweißnaht eine gasdichte Anbindung des Sensoraufnahmestutzens an die Wandung der Abgasführungskomponente zu erreichen. Die erfindungsgemäße Vorgehensweise benötigt all diese zusätzlichen Bearbeitungsmaßnahmen nicht und gestattet es, an nahezu beliebigen Positionierungen von mit Metallmaterial aufgebauten Abgasführungskomponenten einen Sensoraufnahmestutzen anzubringen. Eine derartige Abgasführungskomponente kann also, wie in Fig. 1 dargestellt, beispielsweise eine Rohrleitung sein, kann alternativ aber auch eine Wandung einer Abgasbehandlungsanordnung, eines Schalldämpfers oder dergleichen sein.

Um mit der erfindungsgemäßen Vorgehensweise eine stabile materialschlüssige Verbindung zu erzeugen, kann beispielsweise die Wandung der Abgasführungskomponente mit Blechmaterial aufgebaut sein, während der Sensoraufnahmestutzen mit beispielsweise austenitischem Edelstahl aufgebaut sein kann. Ferner können mit der erfindungsgemäßen Vorgehensweise selbstverständlich mehrere Sensoraufnahmestutzen an einer Abgasführungskomponente angebracht werden. Zu diesem Zwecke können die vorangehend beschriebenen Verfahrensschritte für jeden an einer Abgasführungskomponente anzubringenden Sensoraufnahmestutzen einzeln durchgeführt bzw. wiederholt werden.

## Patentansprüche

1. Verfahren zur Herstellung einer Abgasanlage, insbesondere für eine Brennkraftmaschine eines Fahrzeugs, umfassend die Maßnahmen:
a) Bereitstellen einer Abgasführungskomponente (26) mit einer aus Metallmaterial aufgebauten Wandung (38),
b) Bereitstellen eines an der Wandung (38) der Abgasführungskomponente (26) festzulegenden Sensoraufnahmestutzens (22) aus Metallmaterial, wobei der Sensoraufnahmestutzen (22) einen wenigstens teilweise außerhalb der Abgasführungskomponente (26) zu positionierenden Sensoraufnahmebereich (28) und einen in die Wandung (38) der Abgasführungskomponente (26) eingreifend zu positionierenden Verbindungsbereich (34) umfasst,
c) Pressen des Sensoraufnahmestutzens (22) mit seinem Verbindungsbereich (34) gegen eine Außenoberfläche (40) der Wandung (38) der Abgasführungskomponente (26) in einem zur Festlegung des Sensoraufnahmestutzens (22) vorgesehenen Befestigungsbereich (39) der Wandung (38) und dabei Drehen des Sensoraufnahmestutzens (22) um eine Stutzen-Längsachse (A) derart, dass wenigstens der Verbindungsbereich (34) des Sensoraufnahmestutzens (22) in das Aufbaumaterial der Wandung (38) der Abgasführungskomponente (26) eindringt und zwischen dem Metallmaterial der Wandung (38) und dem Metallmaterial des Sensoraufnahmestutzens (22) eine materialschlüssige Verbindung entsteht,
**dadurch gekennzeichnet, dass** vor Durchführung der Maßnahme c) im Befestigungsbereich (39) keine Öffnung in der Wandung (38) zur Aufnahme des Sensoraufnahmestutzens (22) gebildet wird, und dass bei der Maßnahme b) der Sensoraufnahmestutzen (22) mit einem sich spitzenartig verjüngenden Verbindungsbereich (34) bereitgestellt wird.

2. Verfahren nach Anspruch 1, **dadurch gekennzeichnet, dass** bei der Maßnahme a) die Abgasführungskomponente (26) im Befestigungsbereich (29) mit einer gekrümmten Außenoberfläche (40) bereitgestellt wird.

3. Verfahren nach einem der vorangehenden Ansprüche, **dadurch gekennzeichnet, dass** der Sensoraufnahmestutzen (22) mit einem Verbindungsbereich (34) mit kegelstumpfartiger Außenumfangskontur bereitgestellt wird.

4. Verfahren nach einem der vorangehenden Ansprüche, **dadurch gekennzeichnet, dass** bei der Maßnahme b) der Sensoraufnahmestutzen (22) mit einem an den Verbindungsbereich (34) anschließenden Übergangsbereich (30) und dem an den Übergangsbereich (30) anschließenden, bezüglich des Übergangsbereichs (30) radial erweiterten Sensoraufnahmebereich (28) bereitgestellt wird.

5. Verfahren nach Anspruch 4, **dadurch gekennzeichnet, dass** der Übergangsbereich (30) mit zylindrischer Außenumfangskontur bereitgestellt wird.

6. Verfahren nach Anspruch 4 oder 5, **dadurch gekennzeichnet, dass** der Übergangsbereich (30) in einer stufenartigen Erweiterung (32) in den Sensoraufnahmebereich (28) übergeht.

7. Verfahren nach einem der Ansprüche 1-3, **dadurch gekennzeichnet, dass** bei der Maßnahme b) der Sensoraufnahmestutzen (22') mit dem an den Verbindungsbereich (34) anschließenden Sensoraufnahmebereich (28) bereitgestellt wird.

8. Verfahren nach Anspruch 7, **dadurch gekennzeichnet, dass** der Verbindungsbereich (34) in seinem an den Sensoraufnahmebereich (28) anschließenden axialen Endbereich eine der Außenabmessung des Sensoraufnahmebereichs (28) entsprechende Außenabmessung aufweist.

9. Verfahren nach einem der vorangehenden Ansprüche, **dadurch gekennzeichnet, dass** bei der Maßnahme c) dann, wenn der Sensoraufnahmestutzen (22) eine Soll-Einbaulage bezüglich der Wandung (38) der Abgasführungskomponente (26) erreicht, das Drehen des Sensoraufnahmestutzens (22) um die Stutzen-Längsachse (A) beendet wird.

10. Verfahren nach einem der vorangehenden Ansprüche, **dadurch gekennzeichnet, dass** der Sensoraufnahmestutzen (22) wenigstens in seinem in die Wandung (38) eingreifend oder durch diese hindurchgreifend zu positionierenden Längenbereich mit im Wesentlichen rotationsymmetrischer Außenumfangskontur bereitgestellt ist.

11. Verfahren nach einem der vorangehenden Ansprüche, **dadurch gekennzeichnet, dass** die Wandung (38) der Abgasführungskomponente (26) mit Blechmaterial aufgebaut ist, oder/und dass der Sensoraufnahmestutzen (22) mit vorzugsweise austenitischem Edelstahlmaterial aufgebaut ist.

12. Verfahren nach einem der vorangehenden Ansprüche, **dadurch gekennzeichnet, dass** bei der Maßnahme b) der Sensoraufnahmestutzen (22) mit einem zylindrisch geformten Sensoraufnahmebereich (28) bereitgestellt wird.

13. Verfahren nach einem der vorangehenden Ansprüche, **dadurch gekennzeichnet, dass** bei der Maßnahme c) der Sensoraufnahmestutzen (22) mit seinem Sensoraufnahmebereich (28) bis in den Bereich der Wandung (38) hineinverschoben wird.

14. Verfahren nach Anspruch 12 und Anspruch 13, **dadurch gekennzeichnet, dass** bei der Maßnahme c) der Sensoraufnahmestutzen (22) mit seinem Sensoraufnahmebereich (28) so weit durch eine bei der Maßnahme c) in der Wandung (38) gebildete Öffnung (44) hindurchgeschoben wird, dass der Sensoraufnahmebereich (28) die Wandung (38) vollständig durchsetzt.

## Claims

1. Process for manufacturing an exhaust system, especially for an internal combustion engine of a vehicle, comprising the following steps:
a) providing an exhaust gas-guiding component (26) with a wall (38) made of a metallic material,
b) providing a sensor-mounting connector (22) consisting of metallic material, which is to be fixed to the wall (38) of the exhaust gas-guiding component (26), wherein the sensor-mounting connector (22) comprises a sensor-mounting area (28) to be positioned at least partially outside the exhaust gas-guiding component (26) and a connection area (34) to be positioned such that it meshes with the wall (38) of the exhaust gas-guiding component (26),
c) pressing of the sensor-mounting connector (22) with its connection area (34) against an outer surface (40) of the wall (38) of the exhaust gas-guiding component (26) in a fastening area (39) of the wall (38), which is intended for fixing the sensor-mounting connector (22), and at the same time rotating the sensor-mounting connector (22) about a longitudinal axis (A) of the connector such that at least the connection area (34) of the sensor-mounting connector (22) penetrates into the material forming the wall (38) of the exhaust gas-guiding component (26) and a connection in substance is established between the metallic material of the wall (38) and the metallic material of the sensor-mounting connector (22),
**characterized in that** prior to carrying out step c) in the fastening area (39) no opening is formed in the wall (38) for receiving the sensor-mounting connector (22) and that in step b) the sensor-mounting connector (22) is provided with a connection area (34) tapering in the manner of a tip.

2. Process in accordance with claim 1, **characterized in that** in step a) the exhaust gas-guiding component (26) is prepared with a curved outer surface (40) in the fastening area (29).

3. Process in accordance with one of the preceding claims, **characterized in that** the sensor-mounting connector (22) is prepared with a connection area (34) with a frustoconical outer circumferential contour.

4. Process in accordance with one of the preceding claims, **characterized in that** in step b) the sensor-mounting connector (22) is prepared with a transition area (30) adjoining the connection area (34) and with the sensor-mounting area (28), which adjoins the transition area (30) and is expanded radially in relation to the transition area (30).

5. Process in accordance with claim 4, **characterized in that** the transition area (30) is prepared with a cylindrical outer circumferential contour.

6. Process in accordance with claim 4 or 5, **characterized in that** the transition area (30) passes over into the sensor-mounting area (28) in a step-like expansion (32).

7. Process in accordance with one of the claims 1-3, **characterized in that** in step b) the sensor-mounting connector (22') is prepared with the sensor-mounting area (28) adjoining the connection area (34).

8. Process in accordance with claim 7, **characterized in that** the connection area (34) has an external dimension corresponding to the external dimension of the sensor-mounting area (28) in its axial end area adjoining the sensor-mounting area (28).

9. Process in accordance with one of the preceding claims, **characterized in that** in step c), the rotation of the sensor-mounting connector (22) about the longitudinal axis (A) of the connector is ended when the sensor-mounting connector (22) reaches a desired installation position in relation to the wall (38) of the exhaust gas-guiding component (26).

10. Process in accordance with one of the preceding claims, **characterized in that** the sensor-mounting connector (22) is prepared with an essentially rotationally symmetrical outer circumferential contour at least in its length area, which is to be positioned such that it meshes with the wall (38) or passes through said wall.

11. Process in accordance with one of the preceding claims, **characterized in that** the wall (38) of the exhaust gas-guiding component (26) is made of a sheet metal material, or/and that the sensor-mounting connector (22) is made of a preferably austenitic stainless steel material.

12. Process in accordance with one of the preceding claims, **characterized in that** in step b) the sensor-mounting connector (22) is prepared with a cylindrically formed sensor-mounting area (28).

13. Process in accordance with one of the preceding claims, **characterized in that** in step c) the sensor-mounting connector (22) is displaced with its sensor-mounting area (28) into the area of the wall (38).

14. Process in accordance with claim 12 and claim 13, **characterized in that** in step c) the sensor-mounting connector (22) with its sensor-mounting area (28) is pushed through an opening (44) formed in the wall (38) in step c) until the sensor-mounting area (28) completely passes through the wall (38).

## Revendications

1. Procédé de fabrication d'un système d'échappement, notamment pour un moteur à combustion interne d'un véhicule, comprenant les étapes suivantes :
a) prévoir un élément de guidage des gaz d'échappement (26) fabriqué avec une paroi (38) en matériau métallique,
b) prévoir un connecteur de montage de capteur (22) en matériau métallique, qui doit être fixé sur la paroi (38) de l'élément de guidage des gaz d'échappement (26), le connecteur de montage de capteur (22) présentant une zone de montage de capteur (28) à positionner au moins partiellement à l'extérieur de l'élément de guidage des gaz d'échappement (26) et une zone de raccordement (34) à positionner de manière à ce qu'elle s'engrène avec la paroi (38) de l'élément de guidage des gaz d'échappement (26),
c) presser le connecteur de montage de capteur (22) avec sa zone de raccordement (34) contre une surface extérieure (40) de la paroi (38) de l'élément de guidage des gaz d'échappement (26) dans une zone de fixation (39) de la paroi (38), qui est prévue pour la fixation du connecteur de montage de capteur (22), et en même temps rotation du connecteur de montage de capteur (22) autour d'un axe longitudinal (A) du connecteur de telle sorte qu'au moins la zone de raccordement (34) du connecteur de montage de capteur (22) pénètre dans le matériau formant la paroi (38) de l'élément de guidage des gaz d'échappement (26) et qu'une liaison de substance soit établie entre le matériau métallique de la paroi (38) et le matériau métallique du connecteur de montage de capteur (22), **caractérisé en ce qu'**avant l'exécution de l'étape c) dans la zone de fixation (39), aucune ouverture n'est formée dans la paroi (38) pour recevoir le connecteur de montage de capteur (22) et **en ce que** le connecteur de montage de capteur (22) est pourvu d'une zone de raccordement (34) se rétrécissant à la manière d'une pointe à l'étape b).

2. Procédé selon la revendication 1, **caractérisé en ce que** à l'étape a), l'élément de guidage des gaz d'échappement (26) est préparé dans la zone de fixation (29) avec une surface extérieure (40) incurvée.

3. Procédé selon l'une des revendications précédentes, **caractérisé en ce que** le connecteur de montage de capteur (22) est préparé avec une zone de raccordement (34) ayant un contour circonférentiel extérieur tronconique.

4. Procédé selon l'une des revendications précédentes, **caractérisé en ce que** à l'étape b), le connecteur de montage de capteur (22) est préparé avec une zone de transition (30) adjacente à la zone de raccordement (34) et avec la zone de montage de capteur (28), qui est adjacente à la zone de transition (30) et qui est élargie radialement par rapport à la zone de transition (30).

5. Procédé selon la revendication 4, **caractérisé en ce que** la zone de transition (30) est préparée avec un contour circonférentiel extérieur cylindrique.

6. Procédé selon la revendication 4 ou 5, **caractérisé en ce que** la zone de transition (30) passe dans la zone de montage de capteur (28) en s'élargissant en forme d'escalier (32).

7. Procédé selon l'une des revendications 1 à 3, **caractérisé en ce que** à l'étape b), le connecteur de montage de capteur (22') est prévu avec la zone de montage de capteur (28) adjacente à la zone de raccordement (34).

8. Procédé selon la revendication 7, **caractérisé en ce que** la zone de raccordement (34) présente une dimension extérieure correspondant à la dimension extérieure de la zone de montage de capteur (28) dans sa zone d'extrémité axiale adjacente à la zone de montage de capteur (28).

9. Procédé selon l'une des revendications précédentes, **caractérisé en ce que** à l'étape c), lorsque le connecteur de montage de capteur (22) atteint une position de montage souhaitée par rapport à la paroi (38) de l'élément de guidage des gaz d'échappement (26), la rotation du connecteur de montage de capteur (22) autour de l'axe longitudinal (A) du connecteur est terminée.

10. Procédé selon l'une des revendications précédentes, **caractérisé en ce que** le connecteur de montage de capteur (22) est préparé avec un contour circonférentiel extérieur essentiellement à symétrie de rotation au moins dans sa zone longitudinale, qui doit être positionné de telle sorte qu'il s'engrène avec la paroi (38) ou traverse ladite paroi.

11. Procédé selon l'une des revendications précédentes, **caractérisé en ce que** la paroi (38) de l'élément de guidage des gaz d'échappement (26) est constituée d'un matériau en tôle, et/ou **en ce que** le connecteur de montage de capteur (22) est constitué d'un matériau en acier inoxydable de préférence austénitique.

12. Procédé selon l'une des revendications précédentes, **caractérisé en ce que** à l'étape b), le connecteur de montage de capteur (22) est préparé avec une zone de montage de capteur (28) formée de manière cylindrique.

13. Procédé selon l'une des revendications précédentes, **caractérisé en ce que** à l'étape c), le connecteur de montage de capteur (22) est déplacé avec sa zone de montage de capteur (28) dans la zone de la paroi (38).

14. Procédé selon la revendication 12 et la revendication 13, **caractérisé en ce que**, à l'étape c), le connecteur de montage de capteur (22) avec sa zone de montage de capteur (28) est poussé à travers une ouverture (44) formée dans la paroi (38) à l'étape c) jusqu'à ce que la zone de montage de capteur (28) passe complètement à travers la paroi (38).
